# EUROPÄISCHE PATENTSCHRIFT

(11) **EP 0 923 203 B1**
(45) Veröffentlichungstag und Bekanntmachung des Hinweises auf die Patenterteilung: **18.02.2004**
(21) Anmeldenummer: 98440262.8
(22) Anmeldetag: 20.11.1998
(51) Int. Cl.: H04B 7/06

(54) **Funkvorrichtung zum Senden eines Funksignals über eine Antennenanordnung an eine Mobilstation eines Mobilfunksystems, und Mobilfunksystem**
Radio apparatus for the transmission of a radio signal via an antenna array to a mobile station in a mobile radio system, and mobile radio system
Dispositif pour la transmission d'un signal radio via un réseau d'antennes à une station mobile dans un système mobile radio, et système mobile radio

(30) Priorität: 10.12.1997 DE 19754783
(43) Veröffentlichungstag der Anmeldung: 16.06.1999
(73) Patentinhaber: ALCATEL, 75008 Paris (FR)
(72) Erfinder: Hoek, Cornelis, 71732 Tamm (DE)
(74) Vertreter: Brose, Gerhard, Dipl.-Ing.

(56) Entgegenhaltungen:
- EP-A- 0 807 989
- WO-A-95/12927

## Beschreibung

Die Erfindung betrifft eine Funkvorrichtung nach dem Oberbegriff des Anspruch 1 sowie ein Mobilfunksystem nach dem Oberbegriff des nebengeordneten Anspruchs.

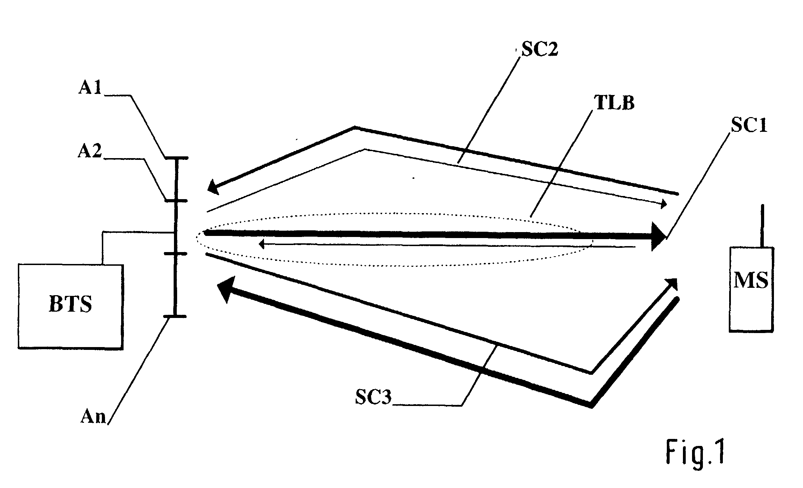

Aus der EP-A-807989 ist ein Mobilfunksystem bekannt mit einer Funkvorrichtung ("communication device 102"), die zum Senden eines Funksignales einen Funksendeteil und eine damit verbundene Antennenanordnung mit mindestens zwei Antennenelementen enthält, und dessen Funksendeteil ein Signalverarbeitungsmittel enthält, das mindestens zwei verschiedene Hilfssignale erzeugt und jeweils zu dem Funksignal hinzufügt, um mindestens zwei unterscheidbare, zusammengesetzte Funksendesignale zu bilden. Wie dort anhand der Figur 1 beschrieben ist, gibt es drei Antennenelemente, die zusammen eine Gruppenantenne bilden. Zum Aussenden des Funksignals wird für jedes Antennenelement ein anderes zusammengesetztes Funksignal gebildet, indem jeweils zu dem eigentlichen Funksignal ein Hilfssignal in Form eines vorbestimmten Signaltons oder eines Signalkodes hinzugefügt wird (siehe dort Seite 7, Zeilen 25 bis 28).
Demnach wird über jedes Antennenelement ein eigenes zusammengesetztes Funksignal ausgesendet. Für den dort beschriebenen Fall von N=3 Antennenelementen bedeutet dies, dass N=3 verschiedene zusammengesetzte Funksignale ausgesendet werden und das somit entsprechend viele Hilfssignale (Töne, Kodes etc.) gebildet werden müssen.

Das bedeutet eine aufwändige Signalverarbeitung am Sendeort. Am Empfangsort wiederum müssen diese N verschiedenen Signale rekonstruiert werden, wobei der Aufwand bei Mehrwegeausbreitung steigt, und zwar um den Faktor M (natürliche Zahl), der die Anzahl der vorhandenen und nutzbaren Funkübertagungswege angibt. Denn bezogen auf den Empfangsort treffen dort pro Funkübertragungsweg N=3 Signalanteile ein. Geht mon davon aus, dass es z.B. M=2 gute Funkübertragungswege gibt, nämlich die beiden besten Wege des Mehrwegeausbreitungsprofils, dann muss der Empfänger insgesamt NxM = 3x2 = 6 Empfangssignalanteile auswerten. Daher ist am Empfangsort der Aufwand für die Signalverarbeitung besonders groß.

Aus DE-A-4427755 ist ein Mobilfunksystem mit einer ortsfesten Funkvorrichtung (Funkfeststation) bekannt, die zum Senden eines Funksignales einen Funksendeteil und eine damit verbundene Antennenanordnung mit mehreren Antennenelementen enthält. Die Antennenanordnung ist eine Gruppenantenne, bei der die mehreren Antennenelemente linear angeordnet sind und phasen- und amplitudengewichtet gespeist werden, so daß die Antennenanordnung das Funksignal gerichtet abstrahlt. Die Funkvorrichtung kann auch gerichtet empfangen und wird für ein sogenanntes SDMA-Mobilfunksystem (SDMA: Space Division Multiple Access) eingesetzt. Durch eine Funkübertragung im Frequenzduplex werden die Empfangssignale und die Sendesignale voneinander getrennt. Die räumliche Ausrichtung des Antennendiagramms für die Empfangsrichtung wie auch für die Senderichtung erfolgt aufgrund von Empfangssignalauswertungen. Das bedeutet, daß die Sendekeule dieselbe räumliche Ausrichtung hat wie die Empfangskeule. Es kann jedoch aufgrund des Frequenzduplex oder aufgrund von Mehrwegeausbreitung der Fall eintreten, daß in der Senderichtung andere Funkausbreitungsbedingungen zu berücksichtigen sind, als in der Empfangsrichtung. Deshalb ist es wünschenswert, die Sendekeule aufgrund der Funkausbreitungsbedingungen in der Senderichtung ausrichten zu können, d.h. unabhängig von der Ausrichtung Empfangkeule ausrichten zu können, um die Funkübertragung in Senderichtung zu verbessern.

Zur Verbesserung der Funkübertragung in Senderichtung wird in DE-A-4219677 ein Mobilfunksystem beschrieben mit einer ortsfesten Funkvorrichtung (Funkfeststation), die über zwei zueinander beabstandeter Antennen ein Funksignal an eine Mobilstation sendet, um in Abwärtsrichtung (downlink) die Funkübertragung störresidenter gegen Schwund (fading) zu machen. Diese Art des Sendens von Funksignalen über zwei räumlich getrennt angeordnete Antennen wird auch als "Sendediversity" bezeichnet. Der Antennenabstand muß mindestens der halben Wellenlänge des zu sendenden Funksignales entsprechen. Dadurch wird erreicht, daß die beiden von den Antennen abgestrahlten Funksendesignale von der Mobilstation unkorreliert empfangen und konstruktiv superponiert werden können. Damit der Empfänger der Mobilstation die beiden Funksendesignale voneinander unterscheiden kann, sendet die Funkvorrichtung die Funksendesignale, indem sie die Antennen abwechslungsweise benützt durch Umschalten zwischen den Antennen im Rhythmus der gesendeten Symbolblöcke. Demnach werden die Antennen niemals gleichzeitig benützt, d.h. die Mehrwegeausbreitung kann nicht kontinuierlich ausgenutzt werden, um die Funkübertragung in Senderichtung zu verbessern.

Aufgabe der Erfindung ist es, die eingangs genannte Funkvorrichtung zu verbessern, um die Funkübertragungsbedingungen in Senderichtung berücksichtigen zu können.

Außerdem soll eine Mobilstation geschaffen werden zum Empfang der von der Funkvorrichtung gesendeten Funksendesignale sowie ein damit ausgestattetes Mobilfunksystem.

Die Aufgabe wird gelöst durch eine Funkvorrichtung mit den Merkmalen nach Anspruch 1 sowie durch ein Mobilfunksystem mit den Merkmalen nach dem nebengeordneten Anspruch.

Demnach wird eine Funkvorrichtung zum Senden eines Funksignals vorgeschlagen, die einen Funksendeteil mit einem Signalverarbeitungsmittel enthält, das mindestens zwei verschiedene Hilfssignale erzeugt und jeweils zu dem zu sendenden Funksignal hinzufügt, um mindestens zwei zusammengesetzte Funksendesignale zu bilden, welche die Funkvorrichtung über die Antennenanordnung sendet, damit eine andere Funkvorrichtung die Funksendesignale auf verschiedenen Funkübertragungswegen unterscheidbar voneinander empfangen kann, wobei die Funkvorrichtung mittels der Antennenanordnung die mindestens zwei unterscheidbaren, zusammengesetzten Funksendesignale über entsprechend viele verschiedene Funkübertragungswege aussendet.

Dadurch können für jeden Funkübertragungsweg die Funkübertragungsbedingungen in Senderichtung ermittelt werden. Somit kann etwa innerhalb der sendenden Funkvorrichtung derjenige Funkübertragungsweg mit den besten Funkübertragungsbedingen ausgewählt und das Strahlungsdiagramm der Antennenanordnung entsprechend ausgerichtet werden. Als bevorzugte Anwendung ist hier eine SDMA-Funkfeststation, die über eine Gruppenantenne gerichtet abstrahlt, zu nennen.

Es können etwa auch innerhalb der empfangenden Funkvorrichtung die auf den verschiedenen Funkübertragungswegen empfangenen Funksignale konstruktiv überlagert werden. Als bevorzugte Anwendung ist hier eine Mobilstation zu nennen, die Funksignale von einer Funkfeststation empfängt, die im Sende-Diversity über beabstandete Antennen abstrahlt.

Die vorgeschlagene Mobilstation empfängt gleichzeitig auf den verschiedenen Funkübertragungswegen die mindestens zwei von der Funkfeststation gesendeten Funksendesignale, die jeweils zusammengesetzt sind aus dem gesendeten Funksignal und aus einem von mindestens zwei verschiedenen Hilfsignalen. Die Mobilstation enthält einen Empfangsteil, der die Hilfssignale detektiert, um die Funksendesignale beim Empfang am Ort der Mobilstation voneinander zu unterscheiden.

Das vorgeschlagene Mobilfunksystem hat mindestens eine erfindungsgemäße Funkfeststation, die mit mindestens einer erfindungsgemößen Mobilstation in Funkverbindung steht und die zum Senden eines Funksignales einen Funksendeteil und eine damit verbundene Antennenanordnung mit mindestens zwei Antennenelementen hat. Das Funksendeteil der Funkfeststation hat ein Signalverarbeitungsmittel, das mindestens zwei verschiedene Hilfssignale erzeugt und jeweils zu dem Funksignal hinzufügt, um mindestens zwei zusammengesetzte Funksendesignal zu bilden, welche die Funkvorrichtung über die Antennenanordnung sendet, damit die mindestens eine Mobilstation die Funksendesignale auf verschiedenen Funkübertragungswegen unterscheidbar voneinander empfangen kann. Die Mobilstation hat einen Empfangsteil, der die Hilfssignale detektiert, um die Funksendesignale beim Empfang am Ort der Mobilstation voneinander zu unterscheiden.

Somit löst die Erfindung die genannte Aufgabe dadurch, daß mindestens zwei verschiedene Hilfssignale erzeugt und jeweils zu dem zu sendenden Funksignal hinzufügt werden, um mindestens zwei zusammengesetzte Funksendesignal zu bilden, welche die Funkvorrichtung über die Antennenanordnung sendet. Dadurch werden mindestens zwei Funksendesignale abgestrahlt, die zwar dieselbe Nutzinformation, nämlich dasselbe Funksignal enthalten, die jedoch verschiedene Kennungen, nämlich die verschiedenen Hilfssignale enthalten. Damit kann am Empfangsort zwischen den Funksendesignalen differenziert werden. Für jedes Funksendesignal kann die Güte der Funkausbreitungsbedingungen in Senderichtung ermittelt werden, etwa durch Empfangpegelmessung oder durch Ermittlung des Signal-Rausch-Verhältnisses. Durch diese Differenzierung wird zwischen den verschiedenen Funksendewegen/Funksenderichtungen unterschieden.

Besonders vorteilhafte Ausgestalltungen der Erfindung sind den Unteransprüchen zu entnehmen:

Besonders vorteilhaft ist es, wenn die Antennenanordnug eine Gruppenantenne mit mehreren Antennenelementen ist und wenn die Funkvorrichtung über die Antennenanordnung die mindestens zwei Funksendesignale in verschiedene Senderichtungen sendet, die den verschiedenen Funkübertragungswegen zugeordnet sind.

Außerdem ist es besonders vorteilhaft, wenn die Funkvorrichtung eine Funkfeststation für ein Mobilfunksystem ist, die mindestens zwei Funksendesignale an die andere Funkvorrichtung, die eine Mobilstation ist, in die verschiedenen Senderichtungen sendet, und wenn die Funkfeststation einen Funkempfangsteil enthält, der mit der Antennenanordnung verbunden ist und der von der Mobilstation eine Information empfängt, die zumindest dasjenige Funksendesignale mit der besten Empfangsqualität am Ort der Mobilstation angibt. Dabei enthält der Funkempfangsteil ein Auswertemittel, welches die empfangene Information auswertet, um das Strahlungsdiagramm der Antennenanordnung auf die entsprechend beste Senderichtung hin auszurichten.

Dadurch wird erreicht, daß nur in diejenige Senderichtung abgestrahlt wird, die die beste Funkübertragungsqualität hat. Da die Funkübertragungsqualität u.a. von der Trägerfrequenz und von den Gegebenheiten im Funkfeld abhängt, ist ggf. Frequenzduplex oder Mehrwegeausbreitung zu berücksichtigen. Das bedeutet das die beste Senderichtung aufgrund von Frequenzduplex oder Mehrwegeausbreitung sich von der besten Empfangsrichtung unterscheiden kann. Die vorgeschlagenen Maßnahmen sind besonders für eine verbesserte SDMA-Funkübertragung geeignet.

Darüberhinaus ist es besonders vorteilhaft, wenn die Funkvorrichtung ein digitales Funksignal sendet und wenn die zwei Hilfssignale zwei zueinander orthogonale Codes sind, insbesondere zwei verschiedene CDMA-Codes (code divisional multiple access) sind, welche das Signalverarbeitungsteil mit einer geringen Amplitude erzeugt, die unterhalb der Ampiltude des digitalen Funksignals und oberhalb, insbesondere knapp oberhalb, eines durchschnittlichen Rauschpegels liegt, welcher zu erwarten ist für die Funkübertragung der zusammengesetzen Funksendesignale an eine zweite Funkvorrichtung, insbesondere an eine Mobilstation.

Dadurch wird hinsichtlich der Qualität des zu sendenden Funksignales erreicht, daß die Amplitude der Hilfssignale so gering ist, daß sie im Vergleich mit der Amplitude des zu sendenden Funksignales im Bereich des zu erwartenden Rauschpegels liegt und daher nur geringfügig stört. Und hinsichtlich der Detektierbarkeit der Hilfsignale am Empfangsort wird erreicht, daß die Amplitude der Hilfssignale noch so ausreichend groß und noch soweit über dem zu erwartenden Rauschpegel liegt, daß der Empfänger die beiden Hilfssignale weitgehend störungsfrei detektieren kann. Die Amplitude der Hilfsignale kann besonders niedrig gehalten werden, wenn die Hilfssignale zwei zueinander orthogonale Codes sind. Es können etwa zwei verschiedene CDMA-Codes verwendet werden.

Es ist auch besonders vorteilhaft, wenn die Funkvorrichtung ein digitales TDMA-Funksignal sendet (time divisional multiple access), das einem Zeitschlitz innerhalb eines Zeitrahmens entspricht und das ein Synchronisationsfeld enthält, und wenn die zwei Hilfssignale zwei veschiedene Synchronisationssequenzen sind, die das Signalverarbeitungsteil erzeugt und jeweils in das Synchronisationsfeld des digitalen Funksignals einträgt, um das erste und das zweite zusammengesetze Funksendesignal zu bilden.

Dadurch wird erreicht, daß bei einer TDMA-Funkübertragung die beiden zusammengesetzten Funksendesignale einfach gekennzeichnet werden können, indem verschiedene Synchronisationssequenzen verwendet werden. Beispielsweise werden verschiedene Trainingssequenzen verwendet. Diese Maßnahme eignet sich besonders zur Verbesserung einer SDMA-TDMA-Funkübertragung.

Bei einer TDMA-Sende-Diversity-Funkübertragung kann bespielsweise das Funksendeteil zwei Funksendesignale mit verschiedenen Trainingssequenzen von Zeitrahmen zu Zeitrahmen abwechselnd über die erste und die zweite Antenne senden. Dadurch wird erreicht, daß die beiden zusammengesetzten Funksendesignale nicht nur aufgrund der verschiedenen Hilfsignale (Trainingssequenzen) an sich voneinander unterscheidbar sind, sondern zusätzlich auch noch aufgrund der verschiedenen Zeitlagen (Zeitschlitze), in denen sie gesendet werden. Um den Mehrwegeempfang möglichst nicht zu unterbrechen und um weiterhin eine kontinuierliche konstruktive Superposition der Empfangssignale aufrechzuerhalten, ist es besonders vorteilhaft, die TDMA-Funkübertragung zu verbessern durch ein verschachteltes Übertragen der TDMA-burst nach dem sogennanten "interleaving"-Verfahren, wie es z.B. im GSM durchgeführt wird. Damit verteilen sich die Anteile (samples) eines Nutzsignales (traffic burst) auf verschiedene zeitlagen, so daß trotz des Wechsels zwischen den Antennen beim Senden des Funksendesignales die Nutzsignalübertragung über eine quasikontinuierliche Mehrwegeausbreitung erfolgt.

Ein weiterer besonderer Vorteil ergibt sich, wenn die Antennenanordnung aus einer ersten Antenne sowie einer zweiten Antenne besteht, die zueinander in einem Abstand angeordnet sind, der mindestens der halben Wellenlänge des zu sendenen Funksignales entspricht, wenn das Signalverarbeitungsmittel die zwei verschiedene Hilfssignale erzeugt und jeweils zu dem Funksignal hinzufügt, um das erste und das zweite zusammengesetzte Funksendesignal zu bilden, welches die Funkvorrichtung über die erste bzw. zweite Antenne sendet, und wenn die Funkvorrichtung einen Phasenschieber enthält, der die Phasenlage des zweiten Funksendesignals gegenüber der Phasenlage des ersten Funksendesignals veränderbar einstellt.

Das hat den Vorteil, daß beim Sende-Diversity die Funksendesignale gleichzeitig über die Antennen gesendet werden können, so daß die Funksendesignale am Ort des Empfängers kontinuierlich superponiert werden können, wobei die Phasenlage so einstellbar ist, daß eine Phasenverschiebung aufgrund der Mehrwegeausbreitung kompensiert wird und die Funksendesignale phasengleich empfangen und konstruktiv superponiert werden. Die Phasenlage kann etwa so eingestellt werden, daß die für das zu beachtende Mehrwegeprofil anzunehmende mittlere Phasenverschiebung kompensiert wird. Das zu beachtende Mehrwegeprofil kann aus einem üblichen Netzplanungsmodell (z.B. Walfish, Okumura) entnommen werden. Dabei wird eines für die Standortumgebung der Funkfestation typisches Mehrwegeprofil genommen.

Oder: Die vorgeschlagene Mobilstation empfängt gleichzeitig das erste und das zweite von der Funkfeststation gesendete Funksendesignal, das zusammengesetzt ist aus einem Funksignal und aus einem ersten bzw. zweiten Hilfsignal, wobei die Mobilstation einen Empfangsteil enthält, der die beiden Hilfssignale detektiert, um die beiden Funksendesignale voneinander zu unterscheiden und um eine Phasendifferenz zwischen den beiden Funksendesignalen beim Empfang am Ort der Mobilstation zu ermitteln. Dadurch kann vorteilhafterweise die Phasenlage optimal eingestellt werden, so daß die tatsächlich auftretende Phasendifferenz kompensiert wird.

Außerdem ist es von besonderem Vorteil, wenn die Funkvorrichtung eine Funkfeststation für ein Mobilfunksystem ist, insbesondere für ein CDMA- und/oder TDMA-Mobilfunksystem, wenn die Funkfeststation einen Funkempfangsteil enthält, der mit mindestens einer der beiden Antennen verbunden ist und der eine Information von der Mobilstation empfängt, die angibt mit welcher Phasendifferenz die beiden Funksendesignale am Ort der Mobilstation empfangen werden, und wenn der Funkempfangsteil ein Auswertemittel enthält, welches aus der empfangenen Information die Phasendifferenz ausliest, um die an dem Phasenschieber eingestellte Phase zu verändern.

Dadurch werden die oben genannten Vorteile in einem System genutzt. Zusätzlich kann die an der sendenden Funkvorrichtung eingestellte Phasenlage an die Funkübertragungssituation fortlaufend angepaßt werden, so daß die beiden Funksendesignale phasengleich am Empfangsort eintreffen und in der dortigen empfangenden Funkvorrichtung optimal superponiert werden können. Der Diversitygewinn kann somit bis zum maximal möglichen Wert erhöht werden.

Die Erfindung wird im folgenden anhand von zwei Ausführungsbeispielen näher beschrieben, wobei auf die folgenden Zeichnungen Bezug genommen wird:
- Fig. 1,: die schematisch den Aufbau eines ersten erfindungsgemäßen Mobilfunksystems für eine SDMA-Funkübertragung zeigt;
- Fig. 2a,: die schematisch den Aufbau eines zweiten erfindungsgemäßen Mobilfunksystems für eine Funkübertragung im Sendediversity zeigt; und
- Fig. 2b,: die Blockschaltbilder einer Funkfeststation und einer Mobilstation zeigt, die zur Einstellung der Phasenlage für das Sendediversity eine Phasendifferenz ermittelt und der Funkfeststation mitteilt.

Figur 1.zeigt als erstes Ausführungsbeispiel schematisch den Aufbau eines SDMA-Mobilfunksystems. Beispielhaft für mehrere Funkvorrichtungen sind eine ortsfeste Funkvorrichtung BTS, im weiteren auch Funkfeststation genannt, und eine mobile Funkvorrichtung MS, im weiteren auch Mobilstation genannt, dargestellt. Die Funkfeststation BTS hat eine Antennenanordnung mit mehreren Antennenelementen A1 bis An, die linear angeordnet sind in einem Abstand von etwas weniger als der halben Wellenlänge (hier im Abstand von 0,4 λ). Demnach ist die Antennenordnung als lineare Gruppenantenne ausgebildet. Sie hat in diesem Beispiel n=8 Antennenelemente. Die Funkfeststation BTS ist eine SDMA-Funkvorrichtung, die mittels der Gruppenantenne gerichtet sendet und empfängt, um Funksignale mit der Mobilstation MS auszutauschen.

In Fig. 1 sind für die Senderichtung als auch für die Empfangsrichtung je drei verschiedene Funkübertragungswege durch Pfeile symbolisch dargestellt, wobei die Funkübertragungsqualität durch die Strichstärke der Pfeile wiedergegeben wird. Je größer die Strichstärke eines Pfeils gezeichnet ist, desto höher ist die Funkübertragungsqualität auf dem entsprechenden Funkübertragungsweg.

Da bei dem in Fig. 1 dargestellten Mobilfunksystem die Funkübertragung im Frequenzduplex erfolgt, unterscheiden sich die Funkausbreitungsbedingungen in der Senderichtung von denen in der Empfangsrichtung. Beispielsweise wird in Senderichtung die höchste Funkübertragungsqualität auf dem direkten Funkweg (Sichtfunkverbindung) erzielt, wohingegen in Empfangsrichtung die höchste Funkübertragungsqualität auf einem indirekten Funkweg (Mehrwegeausbreitung) erzielt wird. Würde an der Gruppenantenne nun die Senderichtung entsprechend der Empfangsrichtung eingestellt werden, so könnte in Senderichtung nicht der beste Funkübertragungsweg genutzt werden. Es soll jedoch die Senderichtung unabhängig von der Empfangsrichtung so eingestellt werden, daß in beide Richtungen jeweils der beste Funkübertragungsweg genutzt wird.

Dazu sendet die Funkfeststation drei verschiedene Funksendesignale SC1, SC2 und SC3 in die drei Senderichtungen, die den verschiedenen Funkübertragungswegen zugeordnet sind. Die Funksendesignale haben denselben Nutzinhalt (Funksignal); sie unterscheiden sich jedoch durch verschiedene Kennungen (Hilfssignale). Am Empfangsort kann dann zwischen den verschiedenen Funksendesignalen -und damit auch zwischen den verschiedenen Funkübertragungswegen- unterschieden werden. Die Mobilstation wertet die Qualität der in Abwärtsrichtung (downlink) empfangenen Funksendesignale SC1, SC2 und SC3 aus, indem sie die Empfangsfeldpegel mißt. Dann teilt sie der Funkfeststation mit, welches der Funksendesignale (hier SC1) mit dem höchsten Pegel empfangen wurde. Dadurch kann die Funkfestation das Strahlungsdiagramm, welches durch die Sendekeule TLB dargestellt ist, auf den besten Funkübertragungsweg hin ausrichten.

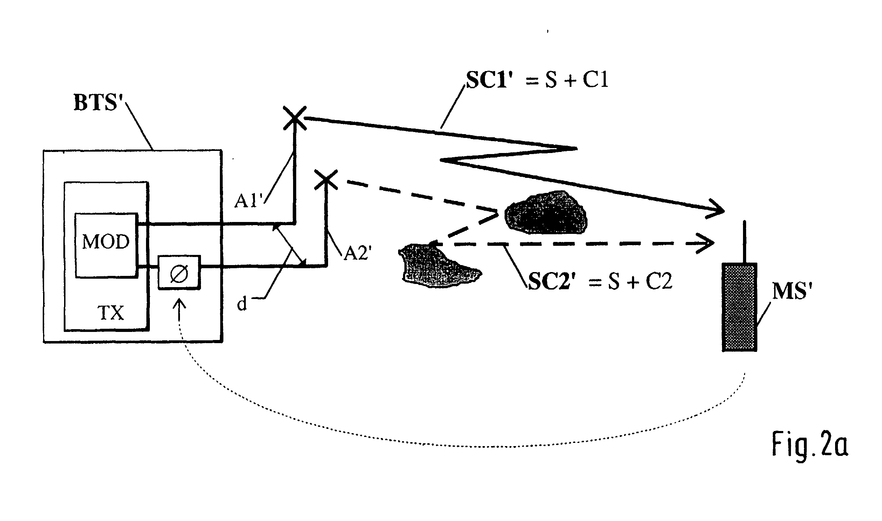

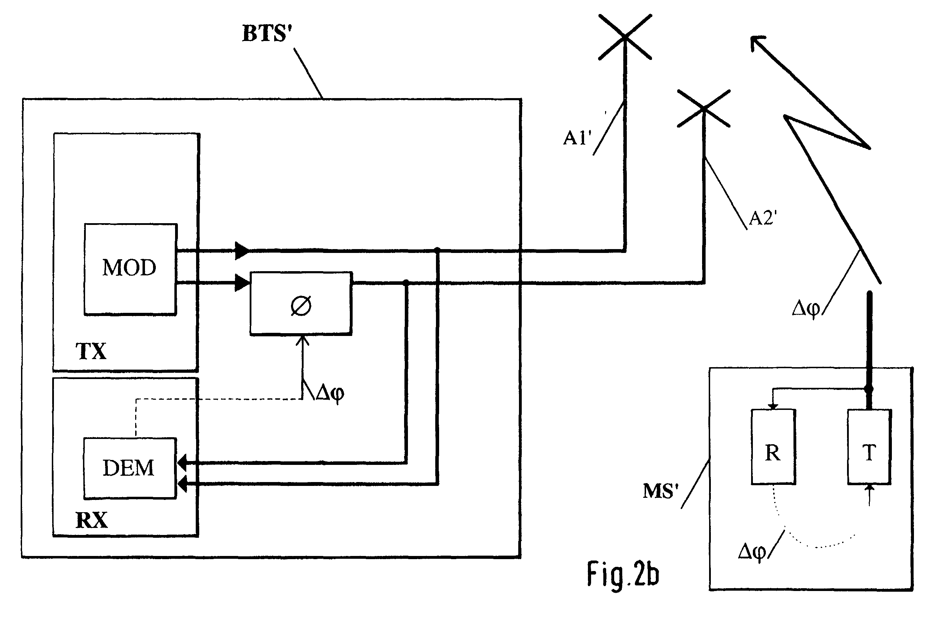

Es ist auch denkbar, daß die Mobilstation alle gemessenen Empfangspegel an die Funkfeststation signallisiert, die anschließend dort zur Ermittlung des besten Funkübertragungsweges miteinander verglichen werden. Außerdem ist es denkbar, daß die Funkfeststation das Antennendiagramm auf die beiden besten Senderichtungen ausrichtet und die Funksendesignale phasenversetzt aussendet, damit beide phasengleich am Empfangsort eintreffen, um dort innerhalb der Mobilstation konstruktiv überlagert zu werden. Dadurch kann ein Diverstiygewinn erzielt werden, der die Empfangsqualität verbessert. Hierzu wird noch näheres anhand der Fig. 2a und 2 b beschrieben.

Die Ausrichtung des Antennendaigramms in der Empfangsrichtung erfolgt nach einem herkömmlichen Verfahren, bei dem die Funkfeststaion BTS die Empfangspegel mißt und vergleicht.

Die Ausrichtung des Antennendiagramm in der Senderichtung wird also unabhängig von der Ausrichtung in der Empfangsrichtung durchgeführt, wobei die Funkausbreitungsbediungungen in der Abwärtsrichtung (downlink) bzw. in der Aufwärtsrichtung (uplink) getrennt voneinander berücksichtigt werden.

Die Erfindung wurde anhand eines ersten Ausführungsbeispiels beschrieben, nämlich anhand eines Mobilfunksystems, in dem phasengesteuerte Gruppenantennen verwendet (sog. "phased arrays") werden, um ein und diesselbe Funkresource in verschiedene Richtungen mehrfach zu verwenden, das heißt um eine sogenannte SDMA-Funkübertragung zu ermöglichen (SDMA: Space Divisional Multiple Access).

Die Erfindung wird nun noch näher anhand eines zweiten Ausführungsbeispiels beschrieben, bei dem die Funkübertragung mittels des sogenannten Sende-Diversity erfolgt:

Figur 2a zeigt schematisch den Aufbau eines zweiten Mobilfunksystems mit einer ortsfesten Funkvorrichtung BTS', im weiteren auch Funkfeststation genannt, und mit einer mobilen Funkvorrichtung MS', im weiteren auch Mobilstation genannt. Die Funkfeststation BTS' enthält einen Funksendeteil TX, der mit einer ersten Antenne A1' und mit einer zweiten Antenne A2' verbunden ist. Die beiden Antennen sind zueinander in einem Abstand d angeordnet, der mindestens der halben Wellenlänge des zu sendenden Funksignales entspricht. Das zu sendende Funksignal S ist ein TDMA-Funksignal und soll über beide Antennen nach dem Sende-Diversity-Verfahren gesendet werden, das heißt das Funksignal S wird sowohl von der ersten Antenne A1' als auch von der zweiten Antenne A2' abgestrahlt.

Würde das Funksignal von beiden Antennen gleichzeitig abgestrahlt werden, ohne die nachfolgend beschriebenen Maßnahmen zu treffen, so könnte aufgrund von Mehrwegeausbreitung der Fall eintreten, daß die beiden abgestrahlten Funksignale am Empfangsort, das heißt am Aufenthaltsort der Mobilstation MS', sich destruktiv überlagern. Die in Fig. 2a beispielhaft dargestellte Mehrwegeempfangssituation ist dort schematisch wiedergegeben durch eine Funkübertragung auf direktem Wege (Sichtfunkverbindung, siehe durchgezogener Pfeil) und durch eine indirekte Funkverbindung (gestrichtelter Pfeil). Würde nun das auf dem indirektem Funkweg übertragene Funksignal aufgrund von Reflektionen eine Phasenverschiebung gegenüber auf dem direkten Wege übertragene Funksignal erfahren, so daß die Phasenverschiebung der halben Wellenlänge entspräche Δϕ = λ/2), so würden sich die beiden abgestrahlten Funksignale am Empfangsort gegenseitig aufheben. Beim Sende-Diversity-Verfahren soll jedoch sichergestellt sein, daß die beiden abgestrahlten Funksignale phasengleich am Empfangsort eintreffen (Δϕ=0), um dort konstruktiv überlagert werden zu können, wodurch der maximale Diversitygewinn erzielt wird. Um nun dieses zu erreichen, wird erfindungsgemäß folgendes vorgeschlagen:

Die erfindungsgemäße Funkvorrichtung BTS' enthält in ihrem Funksendeteil TX ein Signalverarbeitungsmittel MOD (hier z.B. eine Modulationstufe für GMSK-Modulation) das zwei verschiedene Hilfssignale C1 und C2 erzeugt. Die verschiedenen Hilfssignale werden von dem Signalverarbeitungsmittel MOD zu dem zu sendenden Funksignal S hinzugefügt, um ein erstes und ein zweites zusammengesetztes Funksignal SC1' und SC2' zu bilden. Das erste zusammengesetzte Funksendesignal SC1' wird über die erste Antenne A1' abgestrahlt, und zweite zusammengesetzte Funksendesignal SC2' wird über die zweite Antenne A2' abgestrahlt. Die beiden verschiedenen Hilfssignale C1 und C2 sind vorzugsweise zwei zueinander orthogonale Codes und dienen zur Unterscheidung der über die verschiedenen Funkpfade (Mehrwegeempfang) empfangenen Funksignale. Das bedeutet, daß am Empfangsort die Mobilstation MS' anhand der verschiedenen Hilfssignale das eine zusammengesetzte Funksendeignal SC1^{1'} von dem anderen zusammengesetzten Funksendesignal SC2' unterscheiden kann und daß die Mobilstation MS' dadurch zwischen den verschiedenen Funkpfaden differenzieren kann.

Die Funkfeststation BTS' enthält neben den oben genannten Komponenten auch einen Phasenschieber ⌀, der die Phasenlage des zweiten Funksendesignals SC2' gegenüber der Phasenlage des ersten

Funksendesignals SC1' veränderbar einstellt. Wie noch anhand der Fig. 2b näher beschrieben wird, stellt der Phasenschieber die Phasenlage derart ein, daß die beiden über die beabstandeten Antennen abgestrahlten Funksendesignale phasengleich am Empfangsort bei der Mobilstation MS' eintreffen. Dadurch kann der maximale Diversitygewinn erreicht werden.

Anhand der Figur 2b wird nun beispielhaft beschrieben, wie die Phasenlage am Phasenschieber ⌀ optimal eingestellt werden kann:

Fig. 2b zeigt Blockschaltbilder der Funkfeststation BTS' und der Mobilstation MS'. Die Funkfestation BTS' enthält neben den bereits genannten Funksendeteil TX, dem Signalverarbeitungsmittel MOD und dem Phasenschieber ⌀ auch einen Funkempfangsteil RX mit einem Auswertemittel DEM, welches eine noch später beschriebene Information auswertet und das Auswerteergebnis an den Phasenschieber weiterleitet, um die dort einzustellenden Phasenlage optimal zu verändern. Das Auswertemittel DEM ist in diesem Beispiel eine Demodulationsstufe für GMSK-Funksignale. Sowohl der Sendeteil TX als auch der Funkempfangsteil RX sind mit den beiden Antennen A1' und A2' über einen nicht dargestellten Duplexer verbunden. Die Übertragung der Funksignale erfolgt im Frequenzduplex (FTD: Frequency Duplex), wobei der Duplexabstand zwischen den Sendefrequenzen und den Empfangsfrequenzen 45 MHz beträgt.

Die Mobilstation MS' enthält eine Antenne, einen damit verbundenen Sendeteil T und einen damit verbundenen Empfangsteil R. Der Empfangsteil R der Mobilstation MS' detektiert nun die in den zusammengesetzten Funksendesignalen SC1' und SC2' enthaltenen Hilfssignale C1 bzw. C2 mittels einer Dekodierung der entsprechenden orthogonalen Codes. Aufgrund der detektierten Hilfssignale kann nun die Mobilstation MS' zwischen den beiden Funksendesignalen SC1' und SC2' unterscheiden, um eine Phasendifferenz Δϕ zwischen diesen beiden Funksendesignalen am Empfangsort der Mobilstation zu ermitteln. Treffen die beiden Funksendesignale SC1' und SC2' phasengleich am Empfangsort ein, so beträgt die Phasendifferenz gleich Null (Δϕ=0). Tritt jedoch aufgrund des Mehrwegempfangs eine Phasendifferenz ungleich Null (Δϕ≠0) auf, so sendet die Mobilstation diese gemessene Phasendifferenz Δϕ an die Funkfeststation BTS'. Demnach wird in Aufwärtsrichtung (sog. "uplink") von der Mobilstation MS' an die Funkfeststation BTS' eine Information übertragen, die die ermittelte Phasendifferenz Δϕ angibt.

Die von der Funkfeststation BTS' empfangene Information wird in dem Empfangsteil dem Auswertemittel DEM zugeführt und dort ausgewertet. Das Auswertemittel, das in diesem Beispiel ein Demodulator DEM ist, ddekodiert die Phasendifferenz D aus dem empfangenen Signal und gibt sie an den Steuereingang des Phasenschiebers ⌀ weiter. Der Phasenschieber stellt nun seine Phasenlage so ein, daß das Funksendesignal SC2' über die zweite Antenne A2' phasenverschoben abgestrahlt wird, wobei die Phasenverschiebung genau der ermittelten Phasendifferenz mit umgekehrten Vorzeichen entspricht. In diesem Beispiel wird also das Funksendesignal SC2' voreilend mit der Phasendifferenz - Δϕ abgestrahlt von der Antenne A2', wodurch dieses zweite Funksendesignal SC2' phasengleich zum ersten Funksendesignal SC1' am Empfangsort der Mobilstation MS' eintrifft, um dort optimal konstruktiv überlagert zu werden.

In dem beschriebenen Mobilfunksystem erfolgt die Funkübertragung gemäß dem GSM-Standard (Global System for Mobile Communications). Das bedeutet, daß die Funksignale im TDMA-Verfahren übertragen werden, wobei zwischen den Sendefrequenzen und Empfangsfrequenzen ein Duplexabstand von 45 MHz besteht. Der nach GSM definierte Zeitrahmenaufbau mit den darin angeordneten acht Zeitschlitzen, schreibt vor, daß in jedem Zeitschlitz ein Synchronisationsfeld enthalten ist, in das eine Synchronisationssequenz (sog. "training sequence") eingetragen wird. Erfindungsgemäß kann nun zur Unterscheidung der beiden gesendeten Funksendesignale SC1' und SC2' dieses Synchronisationfeld abwechselnd von Zeitrahmen zu Zeitrahmen mit zwei sich unterscheidenden Synchronisationsequenzen (verschiedene "training sequences") beschrieben werden. Diese beiden Synchronisationsequenzen entsprächen dann zwei Hilfssignalen C1 oder C2. Wird nun abwechselnd von Zeitrahmen zu Zeitrahmen nur eine beiden Antennen A1' oder A2' benutzt, so wird über den Empfangsweg, zum Beispiel den direkten Funkweg, die eine Synchronisationsequenz C1 zusammen mit dem Funksendesignal übertragen, und über den anderen Funkweg, das heißt über den indirekten Funkweg, die andere Synchronisationsequenz C2 mit dem Funksendesignal übertragen. Daher kann am Empfangsort der Mobilstation MS' zwischen den verschiedenen Funkübertragungswegen differenziert werden. Diese Maßnahme kann auch in Kombination mit der bereits oben beschriebenen Maßnahme, nämlich der verschiedenen Codierung der Funksendesignale, kombiniert werden.

Die Erfindung wurde anhand von Mobilfunksystemen mit einer Funkfeststation und einer Mobilstation beschrieben. Es ist auch denkbar, ein erfindungsgemäßes Funksystem zu schaffen, in dem sich nur ortsfeste oder nur mobile Funkvorrichtungen befinden.

## Patentansprüche

1. Funkvorrichtung (BTS), die zum Senden eines Funksignales (S) einen Funksendeteil (TX) und eine damit verbundene Antennenanordnung mit mindestens zwei Antennenelementen (A1 bis An) enthält,
und
dessen Funksendeteil (TX) ein Signalverarbeitungsmittel (MOD) enthält, das mindestens zwei verschiedene Hilfssignale (C1, C2) erzeugt und jeweils zu dem Funksignal (S) hinzufügt, um mindestens zwei unterscheidbare, zusammengesetzte Funksendesignale (SC1 bis SC3) zu bilden,
**dadurch gekennzeichnet, daß**
die Funkvorrichtung (BTS) über die Antennenanordnung die mindestens zwei unterscheidbaren, zusammengesetzten Funksendesignale (SC1 bis SC3) in verschiedene Senderichtungen sendet, die den verschiedenen Funkübertragungswegen zugeordnet sind.

2. Funkvorrichtung (BTS) nach Anspruch 1, **dadurch gekennzeichnet, daß** die Antennenanordnung eine Gruppenantenne mit mehreren Antennenelementen (A1 bis An) ist.

3. Funkvorrichtung (BTS) nach Anspruch 2, **dadurch gekennzeichnet, daß** die Funkvorrichtung eine Funkfeststation (BTS) für ein Mobilfunksystem ist, die mindestens zwei Funksendesignale (SC1 bis SC3) an die andere Funkvorrichtung, die eine Mobilstation (MS) ist, in die verschiedenen Senderichtungen sendet, daß die Funkfeststation (BTS) einen Funkempfangsteil enthält, der mit der Antennenanordnung verbunden ist und der von der Mobilstation (MS) eine Information empfängt, die zumindest dasjenige Funksendesignale (SC1) mit der besten Empfangsqualität am Ort der Mobilstation (MS) angibt, und daß der Funkempfangsteil ein Auswertemittel enthält, welches die empfangene Information auswertet, um das Strahlungsdiagramm der Antennenanordnung auf die entsprechend beste Senderichtung (TLB) hin auszurichten.

4. Funkvorrichtung (BTS') nach Anspruch 1, **dadurch gekennzeichnet, daß** die Funkvorrichtung ein digitales Funksignal sendet und daß die Hilfssignale mindestens zwei zueinander orthogonale Codes (C1, C2) sind, insbesondere verschiedene CDMA-Codes sind, welche das Signalverarbeitungsteil (MOD) mit einer geringen Amplitude erzeugt, die unterhalb der Ampiltude des digitalen Funksignals (S) und oberhalb, eines durchschnittlichen Rauschpegels liegt, welcher zu erwarten ist für die Funkübertragung der zusammengesetzen Funksendesignale (SC1', SC2') an die andere Funkvorrichtung, insbesondere an eine Mobilstation (MS').

5. Funkvorrichtung nach Anspruch 1, **dadurch gekennzeichnet, daß** die Funkvorrichtung ein digitales TDMA-Funksignal sendet, das einem Zeitschlitz innerhalb eines Zeitrahmens entspricht und das ein Synchronisationsfeld enthält, und daß die zwei Hilfssignale zwei veschiedene Synchronisationssequenzen sind, die das Signalverarbeitungsteil erzeugt und jeweils in das Synchronisationsfeld des digitalen Funksignals einträgt, um das erste und das zweite zusammengesetze Funksendesignal zu bilden.

6. Mobilfunksystem mit mindestens einer Funkfeststation (BTS), und mit mindestens einer Mobilstation (MS), wobei die Funkfeststation (BTS) mit mindestens einer Mobilstation (MS) in Funkverbindung steht und wobei die Funkfeststation (BTS) zum Senden eines Funksignales einen Funksendeteil und eine damit verbundene Antennenanordnung mit mindestens zwei Antennenelementen (A1 bis An) enthält,
bei dem
der Funksendeteil ein Signalverarbeitungsmittel enthält, das mindestens zwei verschiedene Hilfssignale erzeugt und jeweils zu dem Funksignal hinzufügt, um mindestens zwei unterscheidbare, zusammengesetzte Funksendesignale (SC1 bis SC3; SC1', SC2') zu bilden, welche die Funkvorrichtung (BTS, BTS') über die Antennenanordnung sendet, damit die mindestens eine Mobilstation (MS) die Funksendesignale auf verschiedenen Funkübertragungswegen unterscheidbar voneinander empfangen kann, und bei dem die Mobilstation (MS) einen Empfangsteil enthält, der die Hilfssignale detektiert, um die Funksendesignale (SC1 bis SC3) beim Empfang am Ort der Mobilstation voneinander zu unterscheiden, und daß der Empfansteil der Mobilstation (MS) die Empfangsqualitäten der Funksendesignale (SC1 bis SC3) ermittelt, und daß die Mobilstation (MS) einen Sendeteil enthält, der eine Information über zumindest die beste Empfangsqualität an die Funkfeststation (BTS) sendet, damit die Funkfeststation das Strahlungsdiagramm ihrer Antennenanordnung auf die entsprrechend beste Senderichtung (TLB hin ausrichtet.
**dadurch gekennzeichnet, daß**
die Funkvorrichtung (BTS, BTS') über die Antennenanordnung die mindestens zwei unterscheidbaren, zusammengesetzten Funksendesignale (SC1 bis SC3; SC1', SC2') in verschiedene Senderichtungen sendet, die den verschiedenen Funkübertragungswegen zugeordnet sind.

7. Mobilfunksystem nach Anspruch 6, **dadurch gekennzeichnet, daß** die Antennenanordnung der Funkfeststation (BTS) eine Gruppenantenne mit mehreren Antennenelementen (A1 bis An) ist, und daß die Funkfeststation (BTS) über die Antennenanordnung die mindestens zwei Funksendesignale (SC1 bis SC3) in verschiedene Senderichtungen sendet, die verschiedenen Funkübertragungswegen zugeordnet sind, daß der Empfangsteil der Mobilstation die Empfangsqualitäten der Funksendesignale (SC1 bis SC3) ermittelt, und daß die Mobilstation (MS) einen Sendeteil enthält, der eine Information über zumindest die beste Empfangsqualität an die Funkfeststation (BTS) sendet, und daß die Funkfeststation einen Funkempfangsteil mit einem ein Auswertemittel enthält, welches die empfangene Information auswertet, um das Strahlungsdiagramm der Antennenanordnung auf die entsprechend beste Senderichtung (TLB) hin auszurichten.

## Claims

1. Radio apparatus (BTS), which to transmit a radio signal (S) contains a radio transmission part (TX) and an associated antenna array with at least two antenna elements (A1 to An), and the radio transmission part (TX) of which contains signal processing means (MOD) that generate at least two different auxiliary signals (C1, C2) and add them respectively to the radio signal (S), in order to form at least two distinguishable, composite radio transmission signals (SC1 to SC3), **characterized in that** the radio apparatus (BTS) transmits the at least two distinguishable, composite radio transmission signals (SC1 to SC3) via the antenna array in different transmit directions that are assigned to the different radio transmission paths.

2. Radio apparatus (BTS) according to claim 1, **characterized in that** the antenna array is an array antenna with a plurality of antenna elements (A1 to An).

3. Radio apparatus (BTS) according to claim 2, **characterized in that** the radio apparatus is a base station (BTS) for a mobile radio system, which station transmits at least two radio transmission signals (SC1 to SC3) to the other radio apparatus, which is a mobile station (MS), in the different transmit directions, that the base station (BTS) contains a radio receiving part, which is connected to the antenna array and receives information from the mobile station (MS), which information specifies at least the radio transmission signal (SC1) with the best receiving quality at the location of the mobile station (MS), and that the radio receiving part contains evaluation means, which evaluate the information received in order to align the radiation pattern of the antenna array to the correspondingly best transmit direction (TLB).

4. Radio apparatus (BTS') according to claim 1, **characterized in that** the radio device transmits a digital radio signal and that the auxiliary signals are at least two codes (C1, C2) orthogonal to one another, in particular different CDMA codes, which the signal processing part (MOD) generates with a low amplitude that is below the amplitude of the digital radio signal (S) and above an average noise level that is to be expected for the radio transmission of the composite radio transmission signals (SC1', SC2') to the other radio apparatus, in particular to a mobile station (MS').

5. Radio apparatus according to claim 1, **characterized in that** the radio apparatus transmits a digital TDMA radio signal, which corresponds to a time slot within a time interval and contains a synchronization field, and that the two auxiliary signals are two different synchronization sequences, which the signal processing part generates and enters respectively into the synchronization field of the digital radio signal, in order to form the first and the second composite radio transmission signal.

6. Mobile radio system with at least one base station (BTS) and with at least one mobile station (MS), the base station (BTS) being in radio communication with at least one mobile station (MS) and the base station (BTS) containing a radio transmission part and an associated antenna array with at least two antenna elements (A1 to An) to transmit a radio signal, in which the radio transmission part contains signal processing means, which generate at least two different auxiliary signals and add them respectively to the radio signal to form at least two distinguishable, composite radio transmission signals (SC1 to SC3; SC1', SC2'), which the radio apparatus (BTS, BTS') transmits via the antenna array, so that the at least one mobile station (MS) can receive the radio transmission signals distinguishably from one another on different radio transmission paths, and in which the mobile station (MS) contains a receiving part that detects the auxiliary signals in order to distinguish the radio transmission signals (SC1 to SC3) from one another when received at the location of the mobile station, and that the receiving part of the mobile station (MS) ascertains the receiving qualities of the radio transmission signals (SC1 to SC3), and that the mobile station (MS) contains a transmission part that transmits information on at least the best receiving quality to the base station (BTS), so that the base station aligns the radiation pattern of its antenna array to the correspondingly best transmit direction (TLB), **characterized in that** the radio apparatus (BTS, BTS') transmits the at least two distinguishable, composite radio transmission signals (SC1 to SC3; SC1', SC2') via the antenna array in different transmit directions that are assigned to the different radio transmission paths.

7. Mobile radio system according to claim 6, **characterized in that** the antenna array of the base station (BTS) is an array antenna with a plurality of antenna elements (A1 to An), and that the base station (BTS) transmits the at least two radio transmission signals (SC1 to SC3) via the antenna array in different transmit directions that are assigned to different radio transmission paths, that the receiving part of the mobile station ascertains the receiving qualities of the radio transmission signals (SC1 to SC3), and that the mobile station (MS) contains a transmission part, which transmits information on at least the best receiving quality to the base station (BTS), and that the base station contains a radio receiving part with evaluation means that evaluate the information received, in order to align the radiation pattern of the antenna array to the correspondingly best transmit direction (TLB).

## Revendications

1. Dispositif de radiocommunication (BTS) qui, pour émettre un signal de radiocommunication (S), comprend une partie émettrice de radiocommunication (TX) et un ensemble d'antennes qui y est relié et qui est muni d'au moins deux éléments d'antenne (A1 à An), et dont la partie émettrice de radiocommunication (TX) comprend un moyen de traitement des signaux (MOD) qui génère au moins deux signaux auxiliaires différents (C1, C2) et les rajoute respectivement au signal de radiocommunication (S) pour former au moins deux signaux composés d'émission par voie hertzienne (SC1 à SC3) pouvant être différenciés entre eux, **caractérisé en ce que**, par l'intermédiaire de l'ensemble d'antennes, le dispositif de radiocommunication (BTS) diffuse dans différentes directions d'émission, qui sont attribuées aux différentes voies de transmission par voie hertzienne, les au moins deux signaux composés d'émission par voie hertzienne pouvant être différenciés entre eux (SC1 à SC3).

2. Dispositif de radiocommunication (BTS) selon la revendication 1, **caractérisé en ce que** l'ensemble d'antennes est une antenne de groupe avec plusieurs éléments d'antenne (A1 à An).

3. Dispositif de radiocommunication (BTS) selon la revendication 2, **caractérisé en ce que** le dispositif de radiocommunication est une station de radiocommunication fixe (BTS) pour un système de radiocommunication mobile, qui émet dans les différentes directions d'émission au moins deux signaux d'émission par voie hertzienne (SC1 à SC3) à l'autre dispositif de radiocommunication, qui est une station mobile (MS), **en ce que** la station de radiocommunication fixe (BTS) comprend une partie réceptrice de radiocommunication, qui est reliée avec l'ensemble d'antennes et qui reçoit de la station mobile (MS) une information indiquant au moins le signal d'émission par voie hertzienne (SC1) ayant la meilleure qualité de réception sur le lieu où se trouve la station mobile (MS) et **en ce que** la partie réceptrice de radiocommunication comprend un moyen d'exploitation qui exploite l'information reçue pour orienter le diagramme de rayonnement de l'ensemble d'antennes sur la meilleure direction d'émission (TLB) respective.

4. Dispositif de radiocommunication (BTS') selon la revendication 1, **caractérisé en ce que** le dispositif de radiocommunication émet un signal de radiocommunication digital et **en ce que** les signaux auxiliaires sont au moins deux codes orthogonaux entre eux (C1, C2), en particulier différents codes CDMA, que la partie de traitement des signaux (MOD) génère avec un faible amplitude, qui se situe en dessous de l'amplitude du signal de radiocommunication digital (S) et au-dessus d'un niveau de bruit moyen auquel il faut s'attendre pour la transmission par voie hertzienne des signaux composés d'émission par voie hertzienne (SC1', SC2') vers l'autre dispositif de radiocommunication, en particulier vers une station mobile (MS').

5. Dispositif de radiocommunication selon la revendication 1, **caractérisé en ce que** le dispositif de radiocommunication émet un signal de radiocommunication digital TDMA, qui correspond à un créneau de temps à l'intérieur d'un cadre de temps et qui contient un champ de synchronisation et **en ce que** les deux signaux auxiliaires sont deux séquences de synchronisation différentes que la partie de traitement des signaux génère et inscrit respectivement dans le champ de synchronisation du signal de radiocommunication digital pour former le premier et le deuxième signal composé d'émission par voie hertzienne.

6. Système de radiocommunication mobile (BTS) avec au moins une station de radiocommunication fixe (BTS) et avec au moins une station mobile (MS), la station de radiocommunication fixe (BTS) étant en relation de radiocommunication avec au moins une station mobile (MS) et la station de radiocommunication fixe (BTS) comprenant pour l'émission d'un signal de radiocommunication une partie émettrice de radiocommunication et un ensemble d'antennes qui y est relié et qui est muni d'au mois deux éléments d'antenne (A1 à A3), dans le cas duquel la partie émettrice de radiocommunication comprend un moyen de traitement des signaux qui génère au moins deux signaux auxiliaires différents et les rajoute respectivement au signal de radiocommunication pour former au moins deux signaux composés d'émission par voie hertzienne (SC1 à SC3 ; SC1', SC2') pouvant être différenciés entre eux et que le dispositif de radiocommunication (BTS, BTS') émet par l'intermédiaire de l'ensemble d'antennes afin que l'au moins une station mobile (MS) puisse recevoir les signaux d'émission par voie hertzienne sur différentes voies de transmission par voie hertzienne en ayant la possibilité de les différencier entre eux, dans le cas duquel la station mobile (MS) comprend une partie de réception qui détecte les signaux auxiliaires pour, lors de la réception sur le site de la station mobile, pouvoir distinguer entre eux les signaux d'émission par voie hertzienne (SC1 à SC3), dans le cas duquel la partie réceptrice de la station mobile (MS) détermine les qualités de réception des signaux d'émission par voie hertzienne (SC1 à SC3) et dans le cas duquel la station mobile (MS) comprend une partie émettrice, qui émet vers la station de radiocommunication fixe (BTS) une information sur au moins la meilleure qualité de réception afin que la station de radiocommunication fixe oriente le diagramme de rayonnement de son ensemble d'antennes sur la direction d'émission (TLB) qui est respectivement la meilleure, **caractérisé en ce que**, par l'intermédiaire de l'ensemble d'antennes, le dispositif de radiocommunication (BTS, BTS') émet dans différentes directions d'émission, qui sont attribuées aux différentes voies de transmission par voie hertzienne, les au moins deux signaux composés d'émission par voie hertzienne pouvant être différenciés entre eux (SC1 à SC3 ; SC1', SC2').

7. Système de radiocommunication mobile selon la revendication 6, **caractérisé en ce que** l'ensemble d'antennes de la station de radiocommunication fixe (BTS) est une antenne de groupe avec plusieurs éléments d'antennes (A1 à An), **en ce que**, par l'intermédiaire de l'ensemble d'antennes, la station de radiocommunication fixe (BTS) émet dans différentes directions d'émission, qui sont attribuées à différentes voies de transmission par voie hertzienne, les au moins deux signaux d'émission par voie hertzienne (SC1 à SC3), **en ce que** la partie réceptrice de la station mobile détermine les qualités de réception des signaux d'émission par voie hertzienne (SC1 à SC3), **en ce que** la station mobile (MS) comprend une partie émettrice qui émet vers la station de radiocommunication fixe (BTS) une information sur au moins la meilleure qualité de réception et **en ce que** la station de radiocommunication fixe comprend une partie réceptrice de radiocommunication avec un moyen d'exploitation qui exploite l'information reçue pour orienter le diagramme de rayonnement de l'ensemble d'antennes sur la direction d'émission (TLB) qui est respectivement la meilleure.
